# FASCICULE DE BREVET EUROPEEN

(11) **EP 4 008 596 B1**
(45) Date de publication et mention de la délivrance du brevet: **05.04.2023**
(21) Numéro de dépôt: 21211044.9
(22) Date de dépôt: 29.11.2021
(51) Int. Cl.: B61D 17/02, B61D 17/12, H02G 3/04

(54) **VOITURE POUR VÉHICULE FERROVIAIRE AVEC CARÉNAGE DE TOITURE**
WAGEN FÜR SCHIENENFAHRZEUGE MIT DACHVERKLEIDUNG
CAR FOR RAILWAY VEHICLE WITH ROOF FAIRING

(30) Priorité: 02.12.2020 FR 2012531
(43) Date de publication de la demande: 08.06.2022
(73) Titulaire: SpeedInnov, 75008 Paris (FR)
(72) Inventeur: DEMILLY, Charles, 60270 GOUVIEUX (FR); GREGOIRE, Rémi, 17400 AYTRÉ (FR)
(74) Mandataire: Lavoix

(56) Documents cités:
- EP-A1- 2 441 640
- EP-A1- 3 575 176
- CN-A- 104 709 299
- DE-A1-102016 113 253

## Description

La présente invention concerne une voiture pour véhicule ferroviaire, du type comportant : une caisse ; ladite caisse s'étendant selon une direction longitudinale horizontale, correspondant à une direction de déplacement du véhicule ; ladite caisse comprenant : une toiture présentant une surface incurvée, la surface incurvée comportant une partie centrale sensiblement plane et horizontale, et une première et une seconde parties latérales ; et au moins une première ligne électrique s'étendant sur ladite toiture selon la direction longitudinale, ladite première ligne électrique formant une saillie par rapport à ladite surface incurvée.

Les véhicules ferroviaires, notamment à grande vitesse, sont sensibles aux vents latéraux. Ces derniers induisent notamment un déséquilibre de pression de part et d'autre du véhicule, associé à un couple de roulis qui tend à faire basculer le véhicule sur un côté.

Il est connu, notamment sur les trains à grande vitesse en configuration motrices push-pull, de faire circuler des lignes électriques en toiture du véhicule ferroviaire, de sorte à assurer une alimentation électrique tout le long du véhicule.

Des profilés pour maintenir des lignes électriques en toiture sont connus du document CN104709299A. Ce document décrit également un carénage couvrant partiellement les lignes électriques et les profilés.

Cependant, de telles lignes électriques nuisent à l'aérodynamisme du véhicule, en augmentant notamment le couple de roulis associé aux vents latéraux.

La présente invention a pour but de résoudre ce problème. A cet effet, l'invention a pour objet une voiture pour véhicule ferroviaire du type précité, comprenant en outre un élément aérodynamique de stabilisation au vent latéral ; ledit élément aérodynamique de stabilisation comprenant au moins un premier carénage fixé à la toiture de la caisse et recouvrant la première ligne électrique, ledit premier carénage présentant un premier profil aérodynamique, ledit premier profil aérodynamique comprenant une première et une deuxième portions, adjacentes perpendiculairement à la direction longitudinale, chacune desdites première et deuxième portions présentant une forme convexe, un rayon de courbure minimal de la première portion étant inférieur à un rayon de courbure minimal de la deuxième portion, celle-ci étant disposée sensiblement horizontalement et située dans un prolongement de la partie centrale de la surface incurvée de la toiture.

Suivant d'autres aspects avantageux de l'invention, la voiture pour véhicule ferroviaire comporte l'une ou plusieurs des caractéristiques suivantes, prises isolément ou suivant toutes les combinaisons techniquement possibles :
- la première ligne électrique est située à distance d'un plan médian de la voiture, parallèle à la direction longitudinale ; les première et deuxième portions du premier profil aérodynamique du carénage sont situées d'un même côté dudit plan médian ; et lesdites première et deuxième portions sont orientées respectivement à l'opposé du plan médian et vers ledit plan médian ;
- la caisse comporte une deuxième ligne électrique s'étendant sur la toiture selon la direction longitudinale, ladite deuxième ligne électrique formant une saillie par rapport à la surface incurvée de la toiture ; et l'élément aérodynamique de stabilisation comporte un deuxième carénage fixé à la toiture de la caisse et recouvrant la deuxième ligne électrique, ledit deuxième carénage présentant un deuxième profil aérodynamique, ledit deuxième profil aérodynamique comprenant une troisième et une quatrième portions, adjacentes perpendiculairement à la direction longitudinale, chacune desdites troisième et quatrième portions présentant une forme convexe, un rayon de courbure minimal de la troisième portion étant inférieur à un rayon de courbure minimal de la quatrième portion ;
- les premier et deuxième carénages sont disposés sensiblement symétriquement par rapport au plan médian de la voiture.

L'invention se rapporte en outre à un véhicule ferroviaire comprenant une voiture telle que décrite ci-dessus.

L'invention sera mieux comprise à la lecture de la description qui va suivre, donnée uniquement à titre d'exemple non limitatif et faite en se référant aux dessins sur lesquels :
- la figure 1 est une vue schématique partielle, en section, d'une voiture pour véhicule ferroviaire selon un mode de réalisation de l'invention ; et

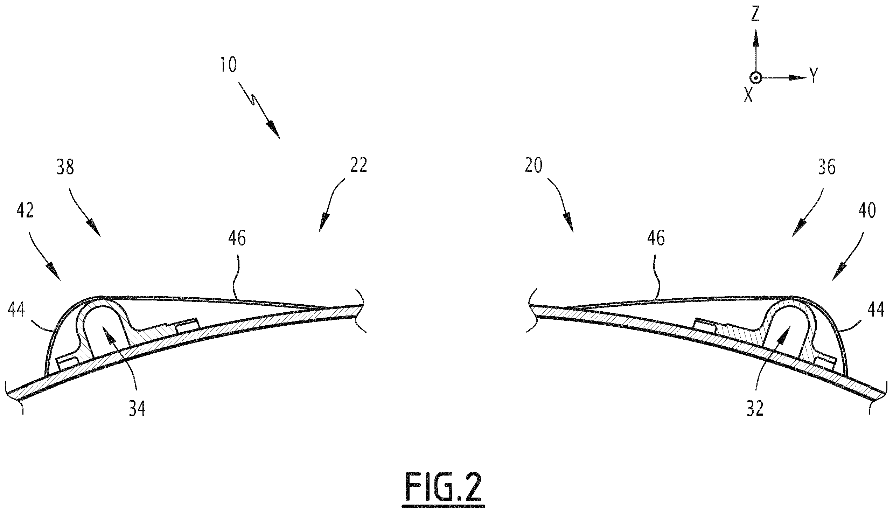

- la figure 2 est une vue de détail schématique de la voiture de la figure 1.

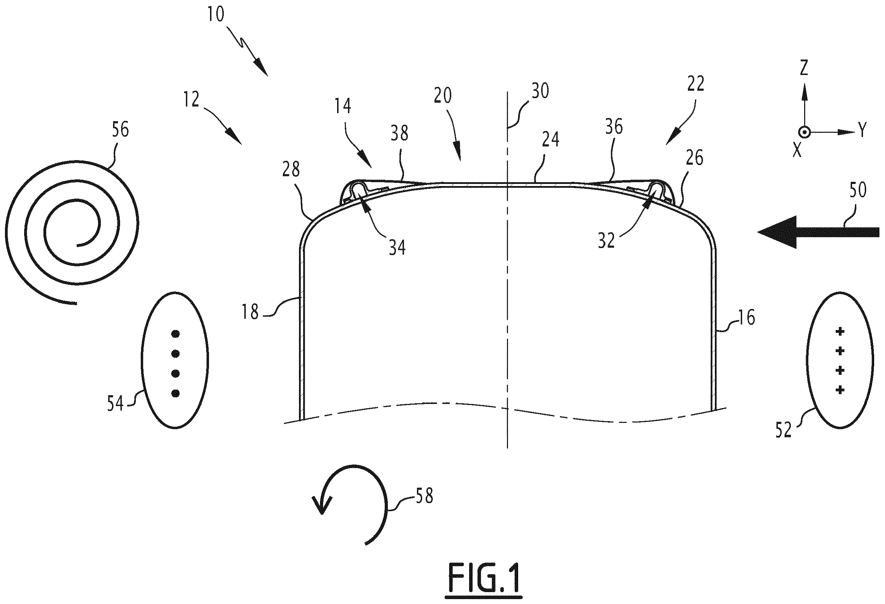

La figure 1 représente schématiquement une voiture 10 selon un mode de réalisation de l'invention. La voiture 10 fait partie d'un véhicule ferroviaire, ledit véhicule comprenant par exemple plusieurs voitures analogues à la voiture 10 reliées entre elles.

La voiture 10 comprend : une caisse 12 ; des roues (non représentées) reliées à ladite caisse ; et au moins un élément aérodynamique 14 de stabilisation.

On considère une base orthonormée (X, Y, Z) associée à la caisse 12. La direction Z représente la verticale. La direction X, ou direction longitudinale, correspond à une direction de déplacement de la voiture 10. Ladite direction de déplacement est considérée comme horizontale. La direction Y, ou direction transversale, correspond à une direction horizontale perpendiculaire à la direction de déplacement du véhicule.

La caisse 12, partiellement représentée sur la figure 1, comprend notamment : une première 16 et une seconde 18 parois latérales ; et une toiture 20 reliant l'une à l'autre lesdites parois latérales.

Chacune des parois latérales 16, 18 s'étend sensiblement dans un plan (X, Z). La toiture 20 présente une surface incurvée 22 sensiblement convexe. Plus précisément, la surface incurvée 22 comporte : une partie centrale 24, sensiblement plane et horizontale, et une première 26 et une seconde 28 parties latérales, reliant la partie centrale 24 respectivement à la première 16 et à la deuxième 18 parois latérales. Chacune des première 26 et seconde 28 parties latérales présente une forme incurvée convexe.

Dans la suite de la description, on considère que les première 26 et seconde 28 parties latérales de la surface incurvée 22 sont sensiblement symétriques par rapport à un plan (X, Z) formant un plan médian 30 de la voiture 10.

La caisse 12 comporte en outre un première 32 et une deuxième 34 lignes électriques, s'étendant sensiblement selon X. Les première 32 et deuxième 34 lignes électriques sont notamment destinées à alimenter la voiture 10 en électricité.

Chacune des première 32 et deuxième 34 lignes électriques est disposée sur la toiture 20, à distance du plan médian 30. Plus précisément, chacune des première 32 et deuxième 34 lignes électriques est disposée au niveau respectivement de la première 26 et de la seconde 28 partie latérale de la surface incurvée 22. De préférence, les première 32 et deuxième 34 lignes électriques sont disposées sensiblement symétriquement par rapport au plan médian 30.

L'élément aérodynamique 14 de stabilisation comporte au moins un carénage 36, 38 fixé à la toiture 20 de la caisse et recouvrant l'une des lignes électriques 32, 34. Plus précisément, l'élément aérodynamique 14 de stabilisation comporte un premier 36 et un deuxième 38 carénages, recouvrant respectivement la première 32 et la deuxième 34 lignes électriques.

Chaque carénage 36, 38 est fixé à la toiture 20, par exemple au moyen de rivets (non représentés).

Les premier 36 et deuxième 38 carénages sont considérés comme sensiblement identiques et seront décrits simultanément ci-après.

Chaque carénage 36, 38 présente un profil aérodynamique 40, 42. Chaque profil aérodynamique 40, 42 comprend une première 44 et une deuxième 46 portions, adjacentes selon la direction transversale Y. Les première 44 et deuxième 46 portions d'un même profil aérodynamique 40, 42 sont situées d'un même côté du plan médian 30. Chacune des première 44 et deuxième 46 portions présente une forme convexe.

La première portion 44, orientée à l'opposé du plan médian 30, est destinée à faire face aux vents latéraux 50 (figure 1) subis par la voiture 10. La première portion 44 a sensiblement une forme aérodynamique de bord d'attaque et présente notamment un rayon de courbure minimal relativement faible.

La deuxième portion 46, orientée vers le plan médian 30, est disposée de manière sensiblement parallèle à l'écoulement d'air souhaité le long de la toiture 20. La deuxième portion 46 présente notamment un rayon de courbure minimal relativement élevé, c'est-à-dire supérieur au rayon de courbure minimal de la première portion 44.

De manière préférentielle, la deuxième portion 46 est sensiblement plane et horizontale. Plus préférentiellement, la deuxième portion 46 se situe dans un prolongement de la partie centrale 24 de la surface incurvée 22 de la toiture 20.

De préférence, les profils aérodynamiques 40, 42 des premier 36 et deuxième 38 carénages présentent des formes sensiblement identiques. En variante, les formes desdits profils aérodynamiques 40, 42 sont différentes.

De préférence, les premier 36 et deuxième 38 carénages sont disposés sensiblement symétriquement par rapport au plan médian 30.

Un procédé de fonctionnement de la voiture 10 va à présent être décrit à l'appui de la figure 1. On considère que le véhicule ferroviaire auquel appartient la voiture 10 se déplace dans la direction X, par exemple sur une voie ferrée. En particulier, on considère que le véhicule ferroviaire se déplace à grande vitesse, par exemple à une vitesse supérieure à 250 km/h.

Par ailleurs, on considère que la voiture 10 est soumis à un vent latéral 50, soufflant dans la direction transversale Y en direction de la première paroi latérale 16.

Le sillage du véhicule ferroviaire crée une surpression 52 du côté de la première paroi latérale 16 et une première dépression 54 du côté de la seconde paroi latérale 18.

En outre, une deuxième dépression, sous la forme d'un vortex 56, se forme à une certaine distance de la voiture 10, du côté de la seconde paroi latérale 18.

Il en résulte un moment de renversement 58, qui tend à faire basculer la voiture 10 autour d'un axe parallèle à X. Les efforts s'exerçant au niveau de la toiture 20 ont un impact maximal sur ledit moment de renversement, en raison d'un bras de levier important.

En l'absence de carénage 36, 38, la présence des lignes électriques 32, 34 génère des turbulences dans le flux d'air latéral.

Au contraire, dans le mode de réalisation représenté, la présence du premier carénage 36 exposé au vent latéral 50 permet d'éviter le décrochage aérodynamique du flux d'air.

Par ailleurs, le vortex 56 est écarté selon Y de la voiture 10. En effet, le décrochage du flux d'air étant évité, le vent tangent au toit du train n'est pas dévié de son axe et vient écarter le vortex 56 qui se trouve sur sa route en Y de la voiture 10.

Ces différents effets permettent de diminuer le différentiel de pression entre les deux côtés latéraux de la voiture 10, ce qui diminue le moment de renversement 58.

La géométrie d'une voiture 10 selon l'invention permet notamment une réduction du moment de renversement 58 de l'ordre de 20%, par rapport à une géométrie similaire dépourvue de carénage 36, 38.

## Revendications

1. Voiture (10) pour véhicule ferroviaire, comprenant une caisse (12) ; ladite caisse s'étendant selon une direction longitudinale (X) horizontale, correspondant à une direction de déplacement du véhicule ; ladite caisse comprenant : une toiture (20) présentant une surface incurvée (22) ; et au moins une première ligne électrique (32) s'étendant sur ladite toiture selon la direction longitudinale, ladite première ligne électrique formant une saillie par rapport à ladite surface incurvée ;
la surface incurvée comprenant une partie centrale (24), sensiblement plane et horizontale, et une première (26) et une seconde (28) parties latérales ;
la voiture comprenant en outre un élément aérodynamique (14) de stabilisation au vent latéral ; ledit élément aérodynamique de stabilisation comprenant au moins un premier carénage (36) fixé à la toiture de la caisse et recouvrant la première ligne électrique, ledit premier carénage présentant un premier profil aérodynamique (40),
ledit premier profil aérodynamique comprenant une première (44) et une deuxième (46) portions, adjacentes perpendiculairement à la direction longitudinale, chacune desdites première et deuxième portions présentant une forme convexe, un rayon de courbure minimal de la première portion étant inférieur à un rayon de courbure minimal de la deuxième portion ;
la voiture étant **caractérisée en ce que** la deuxième portion (46) du profil aérodynamique du carénage est disposée sensiblement horizontalement, ladite deuxième portion étant située dans un prolongement de la partie centrale (24) de la surface incurvée (22) de la toiture (20).

2. Voiture selon la revendication 1, dans laquelle :
- la première ligne électrique (32) est située à distance d'un plan médian (30) de la voiture, parallèle à la direction longitudinale ;
- les première et deuxième portions du premier profil aérodynamique (40) du carénage sont situées d'un même côté dudit plan médian ; et
- lesdites première et deuxième portions sont orientées respectivement à l'opposé du plan médian et vers ledit plan médian.

3. Voiture selon l'une des revendications 1 ou 2, dans laquelle : la caisse comporte une deuxième ligne électrique (34) s'étendant sur la toiture selon la direction longitudinale, ladite deuxième ligne électrique formant une saillie par rapport à la surface incurvée (22) de la toiture ; et l'élément aérodynamique de stabilisation comporte un deuxième carénage (38) fixé à la toiture de la caisse et recouvrant la deuxième ligne électrique, ledit deuxième carénage présentant un deuxième profil aérodynamique (42),
ledit deuxième profil aérodynamique comprenant une troisième (44) et une quatrième (46) portions, adjacentes perpendiculairement à la direction longitudinale, chacune desdites troisième et quatrième portions présentant une forme convexe, un rayon de courbure minimal de la troisième portion étant inférieur à un rayon de courbure minimal de la quatrième portion.

4. Voiture selon la revendication 3 prise en combinaison avec la revendication 2, dans laquelle les premier (36) et deuxième (38) carénages sont disposés sensiblement symétriquement par rapport au plan médian (30) de la voiture.

5. Véhicule ferroviaire (12) comprenant une voiture (10) selon l'une des revendications précédentes.

## Patentansprüche

1. Wagen (10) für Schienenfahrzeug, umfassend einen Wagenkasten (12); wobei sich der Wagenkasten in einer horizontalen Längsrichtung (X) erstreckt, die einer Fahrtrichtung des Fahrzeugs entspricht; der Wagenkasten umfassend: ein Dach (20), das eine gekrümmten Oberfläche (22) aufweist; und mindestens eine erste elektrische Leitung (32), die sich auf dem Dach in der Längsrichtung erstreckt, wobei die erste elektrische Leitung einen Vorsprung in Bezug auf die gekrümmte Oberfläche bildet;
die gekrümmte Oberfläche umfassend einen im Wesentlichen ebenen und horizontalen mittleren Abschnitt (24) und einen ersten (26) und einen zweiten (28) seitlichen Abschnitt;
der Wagen ferner umfassend ein aerodynamisches Element (14) zur Seitenwindstabilisierung; das aerodynamische Stabilisierungselement umfassend mindestens eine erste Verkleidung (36) umfasst, die an dem Dach des Wagenkastens befestigt ist und die erste elektrische Leitung abdeckt, wobei die erste Verkleidung ein erstes aerodynamisches Profil (40) aufweist,
das erste aerodynamische Profil umfassend einen ersten (44) und einen zweiten (46) Abschnitt, die senkrecht zu der Längsrichtung aneinander angrenzen, wobei jeder von dem ersten und dem zweiten Abschnitt eine konvexe Form aufweist, wobei ein minimaler Krümmungsradius des ersten Abschnitts kleiner ist als ein minimaler Krümmungsradius des zweiten Abschnitts;
wobei der Wagen **dadurch gekennzeichnet ist, dass** der zweite Abschnitt (46) des aerodynamischen Profils der Verkleidung im Wesentlichen horizontal angeordnet ist, wobei der zweite Abschnitt in einer Verlängerung des mittleren Abschnitts (24) der gekrümmten Oberfläche (22) des Dachs (20) angeordnet ist.

2. Wagen nach Anspruch 1, wobei:
- die erste elektrische Leitung (32) sich in einem Abstand von einer mittleren Ebene (30) des Wagens befindet, die parallel zu der Längsrichtung ist;
- der erste und der zweite Abschnitt des ersten aerodynamischen Profils (40) der Verkleidung sich auf derselben Seite der mittleren Ebene befinden; und
- der erste und der zweite Abschnitt von der mittleren Ebene weg bzw. auf die mittlere Ebene zu gerichtet sind.

3. Wagen nach einem der Ansprüche 1 oder 2, wobei: der Wagenkasten eine zweite elektrische Leitung (34) umfasst, die sich in Längsrichtung über das Dach erstreckt, wobei die zweite elektrische Leitung von der gekrümmten Oberfläche (22) des Dachs hervorsteht; und das aerodynamische Stabilisierungselement eine zweite Verkleidung (38) umfasst, die an dem Dach des Wagenkastens befestigt ist und die zweite elektrische Leitung abdeckt, wobei die zweite Verkleidung ein zweites aerodynamisches Profil (42) aufweist,
das zweite aerodynamische Profil einen dritten (44) und einen vierten (46) Abschnitt umfasst, die senkrecht zu der Längsrichtung aneinander angrenzen,
wobei jeder von dem dritten und dem vierten Abschnitt eine konvexe Form aufweist, wobei ein minimaler Krümmungsradius des dritten Abschnitts kleiner ist als ein minimaler Krümmungsradius des vierten Abschnitts.

4. Wagen nach Anspruch 3, genommen in Kombination mit Anspruch 2, wobei die erste (36) und die zweite (38) Verkleidung im Wesentlichen symmetrisch zu der mittleren Ebene (30) des Wagens angeordnet sind.

5. Schienenfahrzeug (12), umfassend mindestens einen Wagen (10) nach einem der vorherigen Ansprüche.

## Claims

1. Carriage (10) for a railway vehicle, comprising a body (12); said body extending in a horizontal longitudinal direction (X), corresponding to a direction of travel of the vehicle; said body comprising: a roof (20) having a curved surface (22); and at least a first electrical line (32) extending over said roof in the longitudinal direction, said first electrical line forming a projection with respect to said curved surface;
the curved surface comprising a central, substantially flat and horizontal portion (24) and first (26) and second (28) side portions;
the carriage further comprising a side wind stabilising aerodynamic element (14); said stabilising aerodynamic element comprising at least a first fairing (36) attached to the roof of the body and covering the first electrical line, said first fairing having a first aerodynamic profile (40),
said first airfoil comprising a first (44) and a second (46) portion, adjacent to each other perpendicular to the longitudinal direction, each of said first and second portions having a convex shape, a minimum radius of curvature of the first portion being smaller than a minimum radius of curvature of the second portion;
the carriage being **characterised in that** the second portion (46) of the aerodynamic profile of the fairing is disposed substantially horizontally, said second portion being located in an extension of the central part (24) of the curved surface (22) of the roof (20).

2. The carriage according to claim 1, wherein:
- the first electrical line (32) is located at a distance from a median plane (30) of the carriage, parallel to the longitudinal direction;
- the first and second portions of the first aerodynamic profile (40) of the fairing are located on the same side of said median plane; and
- said first and second portions are oriented away from the median plane and towards said median plane respectively.

3. A carriage according to one of claims 1 or 2, wherein: the body comprises a second electrical line (34) extending on the roof in the longitudinal direction, said second electrical line protruding from the curved surface (22) of the roof; and the aerodynamic stabilising element comprises a second fairing (38) attached to the roof of the body and covering the second electrical line, said second fairing having a second aerodynamic profile (42),
said second aerodynamic profile comprising a third (44) and a fourth (46) portion, adjacent to each other perpendicular to the longitudinal direction,
each of said third and fourth portions having a convex shape, a minimum radius of curvature of the third portion being smaller than a minimum radius of curvature of the fourth portion.

4. A carriage according to claim 3 taken in combination with claim 2, wherein the first (36) and second (38) fairings are arranged substantially symmetrically with respect to the median plane (30) of the carriage.

5. A railway vehicle (12) comprising a carriage (10) according to any of the preceding claims.
